# EUROPEAN PATENT APPLICATION

(11) **EP 4 152 062 A1**
(43) Date of publication of application: **22.03.2023**
(21) Application number: 22183230.6
(22) Date of filing: 06.07.2022
(51) Int. Cl.: G02B 6/42

(54) **DOUBLE-SIDED GLASS SUBSTRATE WITH A HYBRID BONDED PHOTONIC INTEGRATED CIRCUIT**

(30) Priority: 21.09.2021 US 202117481247
(71) Applicant: INTEL Corporation, Santa Clara, CA 95054 (US)
(72) Inventor: BRYKS, Whitney, Tempe 85284 (US); KONG, Jieying, Chandler 85248 (US); ANGOUA, Bainye, Phoenix 85045 (US); WANG, Junxin, Gilbert 85295 (US); BLYTHE, Sarah, Phoenix 85044 (US); OMER, Ala, Phoenix 85008 (US); SENEVIRATNE, Dilan, Chandler 85226 (US)
(74) Representative: Goddar, Heinz J.

(57) **Abstract**

Embodiments described herein may be related to apparatuses, processes, and techniques directed to a double-sided glass substrate (102), to which a photonic integrated circuit, PIC, (104) is hybrid bonded to a first side of the glass substrate. A die (110,112,114) is coupled with the second side of the glass substrate opposite the first side, the PIC (104) and the die (110,112,114) are electrically coupled with electrically conductive through glass vias (106) that extend from the first side of the glass substrate (102) to the second side of the glass substrate (102). Other embodiments may be described and/or claimed.

## Description

### FIELD

Embodiments of the present disclosure generally relate to the field of semiconductor packaging, and in particular to photonic integrated circuits (PIC).

### BACKGROUND

Continued growth in computing and mobile devices will increase the demand for increased bandwidth density between dies within semiconductor packages.

### BRIEF DESCRIPTION OF THE DRAWINGS

FIGs. 1A-1C are diagrams of cross section side views of a package that include a photonic integrated circuit (PIC) that is hybrid bonded to a first side of a glass layer and dies that are coupled with a second side of the glass layer and electrically coupled with the PIC, in accordance with various embodiments.
FIG. 2 includes diagrams of top-down views of a PIC and a plurality of dies electrically coupled with the PIC, in accordance with various embodiments.
FIG. 3 is a diagram of a top-down view of a package that includes multiple dies that are electrically coupled with multiple PICs, in accordance with various embodiments.
FIG. 4A-4G are diagrams of stages of a manufacturing process for manufacturing a double-sided glass substrate with a hybrid bonded PIC, in accordance with various embodiments.
FIG. 5 illustrates multiple examples of laser-assisted etching of glass interconnects processes, in accordance with embodiments.
FIG. 6 illustrates an example of a process for coupling an open cavity PIC with a thermal/power die, in accordance with various embodiments.
FIG. 7 schematically illustrates a computing device, in accordance with various embodiments.

### DETAILED DESCRIPTION

Embodiments described herein may be related to apparatuses, processes, and techniques directed to a double-sided glass layer, which may also be referred to as a double-sided glass substrate or a double-sided glass core, to which a PIC is hybrid bonded to a first side of the glass substrate. In embodiments, a die is coupled with the second side of the glass substrate, and the PIC and the die are electrically coupled with electrically conductive through glass vias (TGV) that extend from the first side of the glass substrate to the second side of the glass substrate. In embodiments, the die may be hybrid bonded with the second side of the glass substrate. In embodiments, the die may be a logic die, or may be another type of die like a high-bandwidth memory (HBM) die or other die.

Embodiments described herein may be used to achieve a high-bandwidth and low latency electric coupling between a PIC and a logic die. By using hybrid bonding techniques to couple the PIC with the glass substrate, a dense TGV array between the PIC and logic dies may be used to facilitate high-bandwidth, low latency electrical coupling for high performance electrical signaling. In embodiments, a thin glass substrate may achieve a high density input/output (I/O) array through the glass substrate. In embodiments, the I/O array may include TGVs that are less than 50 µm in diameter with a pitch that is less than 100 µm. The glass material, or glass-like analogs such as quartz, within the glass substrate may be selected to facilitate high electrical performance, for example with a low loss tangent and low dielectric constant, to enable high throughput signaling. Hybrid bonding between the PIC and the glass substrate facilitates short electrical and thermal pathways for signaling. Embodiments as described further below may also facilitate evanescent coupling between the PIC and an embedded optical waveguide within the glass substrate. This may also facilitate more accurate alignment between the PIC and the embedded optical waveguide during the package manufacturing process.

In embodiments, the integration of the PIC into a package as described herein may serve as a networking hub between a plurality of functional logic dies, for example central processing units (CPU), graphics processing units (GPU), field programmable gate arrays (FPGA), artificial intelligence (AI) dies, or other application-specific integrated circuits (ASIC), and an off-package network. In embodiments, the density of data enabled by optical signals routed to the PIC will be facilitated by an on-package interconnect architecture that includes the PIC hybrid bonded to the glass substrate on a side directly opposite functional logic dies. Note that herein reference is made to a glass substrate due to superior electrical properties. However, a silicon substrate, or a substrate made of different materials, may also be used.

In the following detailed description, reference is made to the accompanying drawings which form a part hereof, wherein like numerals designate like parts throughout, and in which is shown by way of illustration embodiments in which the subject matter of the present disclosure may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

The description may use perspective-based descriptions such as top/bottom, in/out, over/under, and the like. Such descriptions are merely used to facilitate the discussion and are not intended to restrict the application of embodiments described herein to any particular orientation.

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

The term "coupled with," along with its derivatives, may be used herein. "Coupled" may mean one or more of the following. "Coupled" may mean that two or more elements are in direct physical or electrical contact. However, "coupled" may also mean that two or more elements indirectly contact each other, but yet still cooperate or interact with each other, and may mean that one or more other elements are coupled or connected between the elements that are said to be coupled with each other. The term "directly coupled" may mean that two or more elements are in direct contact.

Various operations may be described as multiple discrete operations in turn, in a manner that is most helpful in understanding the claimed subject matter. However, the order of description should not be construed as to imply that these operations are necessarily order dependent.

As used herein, the term "module" may refer to, be part of, or include an ASIC, an electronic circuit, a processor (shared, dedicated, or group) and/or memory (shared, dedicated, or group) that execute one or more software or firmware programs, a combinational logic circuit, and/or other suitable components that provide the described functionality.

Various Figures herein may depict one or more layers of one or more package assemblies. The layers depicted herein are depicted as examples of relative positions of the layers of the different package assemblies. The layers are depicted for the purposes of explanation, and are not drawn to scale. Therefore, comparative sizes of layers should not be assumed from the Figures, and sizes, thicknesses, or dimensions may be assumed for some embodiments only where specifically indicated or discussed.

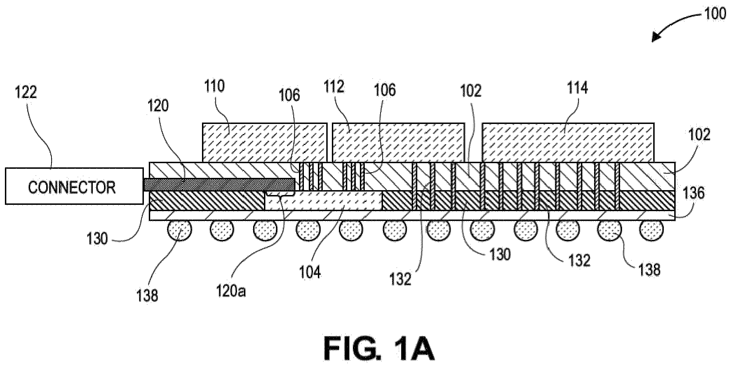

FIGs. 1A-1C are diagrams of cross section side views of a package that includes a PIC that is hybrid bonded to a first side of a glass layer and dies that are coupled with a second side of the glass layer and electrically coupled with the PIC, in accordance with various embodiments. Package 100 includes a glass substrate 102, which may also be referred to as a glass layer, and a PIC 104 that is hybrid bonded to a side of the glass substrate.

One or more TGVs 106, that include electrically conductive material such as copper, are used to electrically couple a first side of the glass substrate 102 with a second side of the glass substrate 102 opposite the first side. In embodiments, the electrically conductive material may completely fill the TGV 106, or the electrically conductive material may be plated within the walls of the TGV 106. In embodiments, the PIC 104 is electrically coupled with the TGV 106. A plurality of dies 110, 112, 114 may be coupled with a side of the glass substrate 102 opposite the PIC 104. In embodiments, these dies 110, 112, 114 may be coupled with the glass substrate 102 using a hybrid bonding technique. Dies 110, 112 may be electrically coupled with the PIC 104 using TGV 106 that includes conductive material.

In embodiments, the PIC 104 may be coupled with an optical waveguide 120 that may be optically coupled with an optical connector 122. In embodiments, the optical connector 122 may be physically coupled with the glass substrate 102. In embodiments, a coupling portion 120a that couples the optical connector 122 and the PIC 104 may be an evanescent coupling due to the close proximity of PIC 104 to the optical waveguide 120 that may be enabled by hybrid bonding. In embodiments, the optical waveguide 120 may be at or near a surface of the glass substrate 102, in order to facilitate optical coupling with the PIC 104, as well as to facilitate alignment during manufacturing of the package 100. In embodiments, the optical waveguide 120 may be formed in the glass substrate 102.

In embodiments, during operation, the PIC 104 may facilitate data communication between the optical signals on the optical waveguide 120 and the first die 110, and may facilitate data communication between the optical signals on the optical waveguide 120 and the second die 112. Note that in embodiments there may be other dies in addition to first die 110 and second die 112, that are electrically coupled with the PIC 104. In embodiments, during operation, the PIC 104 may also facilitate data communication between the first die 110 and the second die 112. In such a capacity, the PIC 104 may operate as a bridge, and may have functionality similar to the functionality found within an embedded multi-die interconnect bridge (EMIB). In embodiments, there may be other dies coupled with the glass substrate 102, for example third die 114, that may not electrically coupled with the PIC 104 through the substrate 102.

In embodiments, the PIC 104 may be placed within a molding layer 130. The molding layer 130 may include multiple electrically conductive pillars 132, which may include conductive material such as copper. In embodiments, the electrically conductive pillars 132 may be electrically coupled with the one or more TGV 106 within the glass substrate 102. A redistribution layer 136 may be physically coupled with the molding layer 130, and may be electrically coupled with the electrically connective pillars 132. In embodiments, the redistribution layer 136 may be electrically and/or physically coupled with a set of bumps 138, which may be referred to as mid-level interface (MLI) bumps, that may be used to electrically and/or physically couple the package 100 with another substrate (not shown). In embodiments, the PIC 104 may be electrically coupled with the RDL 136.

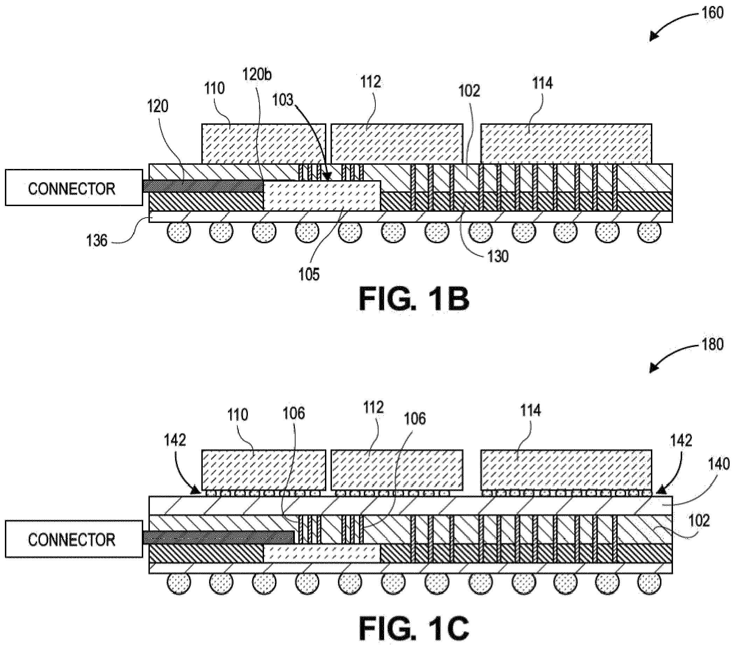

FIG. 1B shows package 160, which may be similar to package 100 of FIG. 1A. In this embodiment, a cavity 103 is formed within a side of the glass substrate 102, and the PIC 105, which is similar to PIC 104 of FIG. 1A, is positioned within the cavity 103. In embodiments molding 130 may be placed beneath the PIC 105. In embodiments, the PIC 105 may be adjacent to the RDL 136. In this embodiment, the embedded optical waveguide 120 may optically couple with an optical component at a side of the PIC 105 using an end coupling 120b, which may also be referred to as end fire coupling or butt coupling. In embodiments, the flatness of the glass substrate 102 may enable fine line and space (LS) routing between the dies 110, 112, 114 as needed.

FIG. 1C shows package 180, which may be similar to package 100 of FIG. 1A, where a second RDL 140 is positioned between the dies 110, 112, 114 and the glass substrate 102. The second RDL 140 may physically and/or electrically couple TGVs 106 with the dies 110, 112, 114. In embodiments, a first level interconnect (FLI) bumping layer 142 may electrically couple the RDL 140 with the dies 110, 112, 114.

With respect to package 100, package 160, and package 180, in embodiments, hybrid bonding may facilitate an extremely fine pitch for TGV 106, so that, for example in thin glass substrates ranging from 50 to 200 µm, TGVs 106 with diameters of less than 50 µm and a pitch of less than 100 µm may be used to provide interconnect density on the scale of the interconnect density of an EMIB, or better. Because hybrid bonding requires tight alignment control during manufacturing, this also allows for accurate positioning of the PIC 104 onto an embedded waveguide 120 within the glass substrate 102. In embodiments, the embedded waveguide 120 may be formed by a variety of techniques, for example ion-exchange or laser direct writing to locally modulate the reflective index of the glass of the waveguide 120. These techniques may also facilitate lateral connection to a PIC by evanescent coupling as described with respect to package 100 and package 180, or the techniques may facilitate edge coupling with the waveguide 120 as shown with respect to package 160.

In embodiments, a thin glass substrate, for example less than 200 µm, in addition to the direct connection between the PIC 104 and the dies 110, 112, may lead to a shorter distances for heat dissipation. In addition, a dense TGV 106 array may also provide a direct pathway for high thermal conductivity between the PIC 104 and the dies 110, 112 to allow thermal routing through an integrated heat spreader (IHS) (not shown), and/or a cooling solution (not depicted).

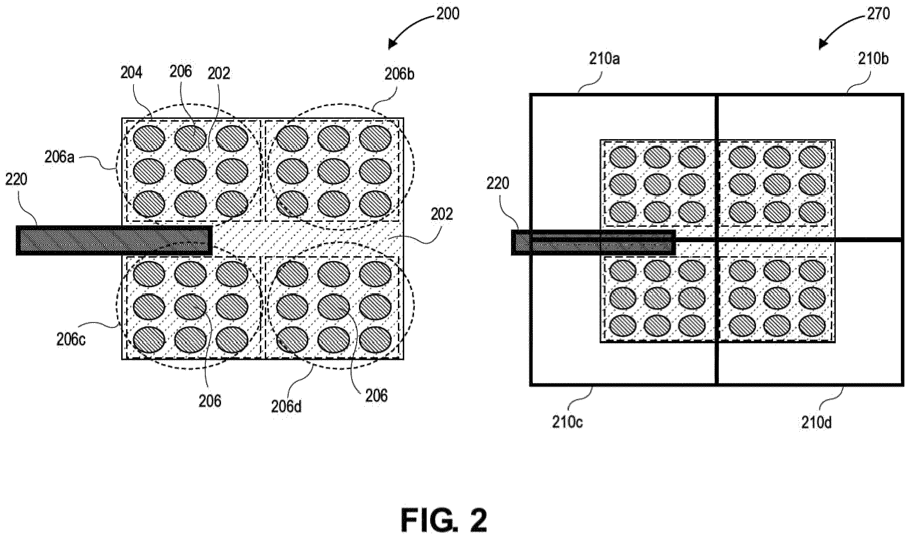

FIG. 2 includes diagrams of top-down views of a PIC and a plurality of dies electrically coupled with the PIC, in accordance with various embodiments. Partial package 200 shows a top-down view of a PIC 204, which may be similar to PIC 104 of FIG. 1A. Glass substrate 202, which may be similar to glass substrate 102 of FIG. 1, is on top of the PIC 204, and includes a plurality of TGV 206, which may be similar to TGV 106 of FIG. 1A.

As shown, the TGV 206 may be filled with a conductive material such as copper. An optical waveguide 220, which may be similar to optical waveguide 120 of FIG. 1, optically couples with the PIC 204. The TGV 206 may be grouped into a first TGV group 206a, a second TGV group 206b, a third TGV group 206c, and a fourth TGV group 206d.

Partial package 270, which may be similar to partial package 200, shows a first die 210a physically and electrically coupled with the first TGV group 206a, a second die 210b physically and electrically coupled with the second TGV group 206b, a third die 210c physically and electrically coupled with the third TGV group 206c, and a fourth die 210d physically and electrically coupled with the fourth TGV group 206d. First die 210a, second die 210a, third die 210a, and fourth die 210a, may be similar to dies 110, 112 of FIG. 1A.

In embodiments, the physical and electrical coupling may be performed by a hybrid bonding technique of the dies 210a, 210b, 210c, 210d to the glass substrate 202. In embodiments, the PIC 204 may simultaneously communicate to each of the dies 210a, 210b, 210c, 210d, but may also function as a bridge to electrically couple the dies 210a, 210b, 210c, 210d with each other for high-speed communication. In embodiments, there is no limit to the number of top dies 210a, 210b, 210c, 201d or TGV 206 groupings.

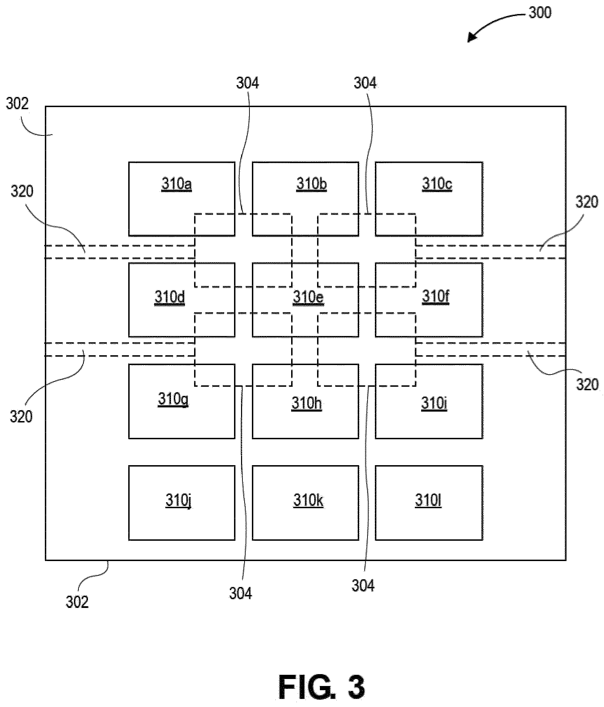

FIG. 3 is a diagram of a top-down view of a package that includes multiple dies that are electrically coupled with multiple PIC, in accordance with various embodiments. Package 300 may include components that are similar to those found in package 100 of FIG. 1A. Package 300 includes a glass substrate 302, which may be similar to glass substrate 102, and a plurality of optical waveguides 320, which may be similar to optical waveguide 120 of FIG. 1A, that are embedded within the glass substrate 302. The plurality optical waveguides 320 are optically coupled, respectively, to a plurality of PIC 304, which may be similar to PIC 104 of FIG. 1A, that are below the glass substrate 302. Including a plurality of PIC 304 may expand the architecture and options available for interconnectivity and inter-die bridging within a package.

Dies 310a-310l are physically coupled to the glass substrate 302, and electrically coupled through TSVs (not shown) that may be similar to TSV 206 of FIG. 2. In embodiments of this configuration, the dies 310a-310l may be electrically coupled with one, or with more than one PIC 304. Some dies, for example dies 310j, 310k, 3101, are not electrically coupled with any PIC 304. In embodiments, electrical coupling with a PIC 304 may enable some dies 310a, 310c, 310g, 310i to be directly electrically coupled with three other dies. Electrical coupling with a PIC 304 may enable other dies 310b, 310d, 310f, 310h to be directly electrically coupled with five other dies. Electrical coupling with a PIC 304 may enable die 310e to be electrically coupled with eight other dies.

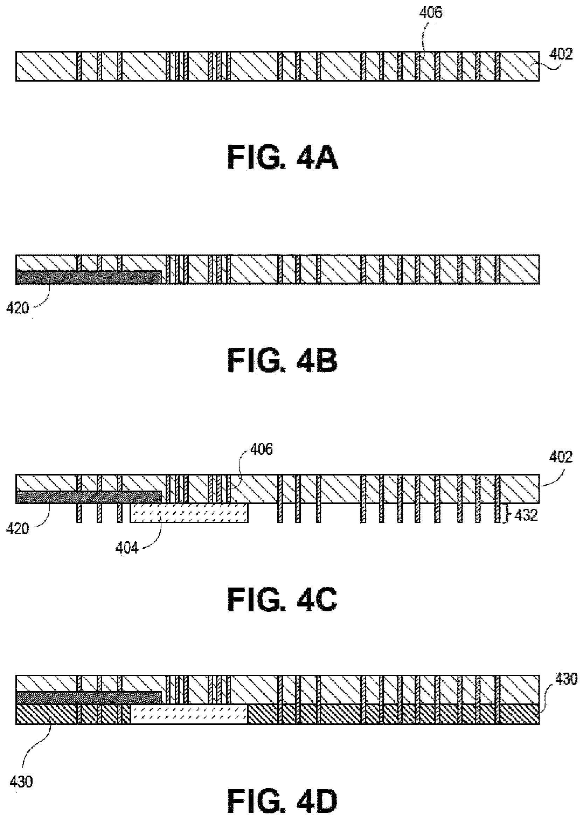

FIG. 4A-4G are diagrams of stages of a manufacturing process for manufacturing a double-sided glass substrate with a hybrid bonded PIC, in accordance with various embodiments. FIG. 4A shows a stage of the manufacturing process where a substrate 402 is identified. In embodiments, the substrate 402 may be similar to substrate 102 of FIG. 1A, and may be a glass substrate, a quartz substrate, a silicon substrate, or a substrate made of some other material or combination of materials that may serve as an interposer layer.

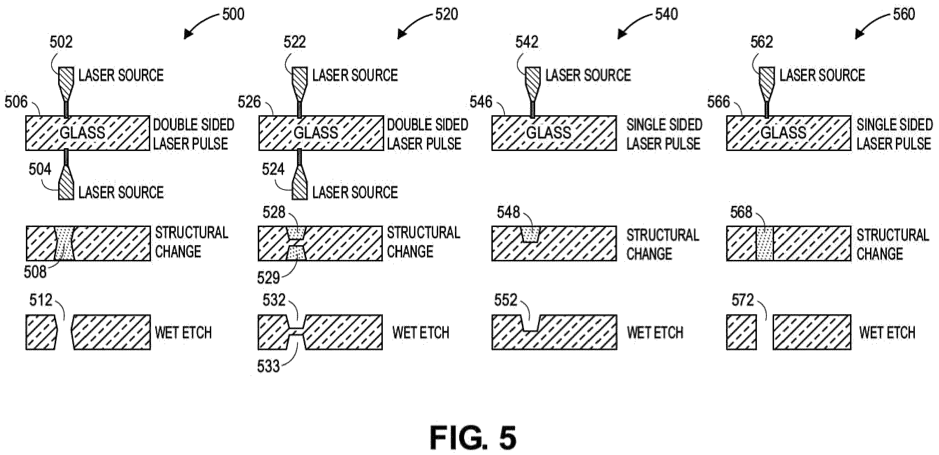

TGV 406, which may be similar to TGV 106 of FIG. 1A, may be formed within the substrate 402, and extend from a first side of the substrate 402 to a second side of the substrate 402 opposite the first side. In embodiments, the TGV 406 may include an electrically conductive material, such as copper, to electrically couple the first side to the second side of the substrate 402. In embodiments, the conductive material may completely fill the TGV 406, or may only partially fill the TGV 406. In embodiments, including the electrically conductive material within the TGV 406 may be referred to as metallization. In embodiments, forming the TGV 406 may include a laser induced deep etching (LIDE) process followed by dilute hydrofluoric acid (HF) or hydroxide salt (XOH) etching, metal seeding, and copper electroplating. In embodiments, the TGV 406 may be formed using the techniques described below with respect to FIG. 5. In embodiments, a thickness of the glass substrate may be 200 µm or less.

FIG. 4B shows a stage in the manufacturing process where an optical waveguide 420, which may be similar to optical waveguide 120 of FIG. 1A, is formed on a surface of the substrate 402. In embodiments, the optical waveguide 420 may be formed using an ion exchange or a laser direct writing technique to increase the refractive index of the waveguide 420 with respect to the surrounding glass within substrate 402.

FIG. 4C shows a stage in the manufacturing process where copper pillars 432, which may be similar to copper pillars 132 of FIG. 1A, may be formed. In embodiments, a technique involving a thick photo resist may be used to plate the tall pillars, for example to a height of 80 µm or more. A PIC 404, which may be similar to PIC 104 of FIG. 1A, may then be hybrid bonded to a surface of the substrate 402, optically coupled with the optical waveguide 420, and then electrically coupled with the TGV 406 within the substrate 402. It should be noted that the order in which the PIC 404 is placed and the copper pillars 432 are formed may be reversed.

FIG. 4D shows a stage in the manufacturing process where a molding layer 430, which may be similar to molding layer 130 of FIG. 1A may be formed. In embodiments, molding layer 430 may be formed by applying an over mold, curing the over mold, and then back grinding the over mold.

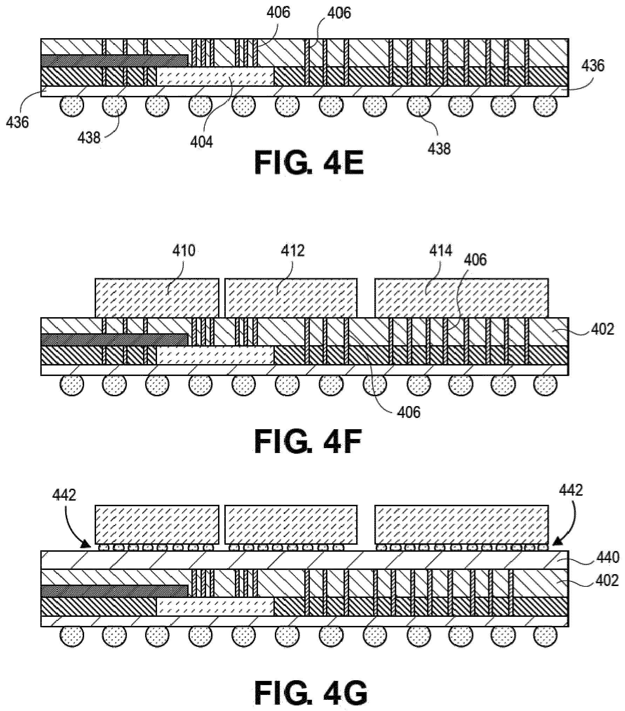

FIG. 4E shows a stage in the manufacturing process where an RDL layer 436, which may be similar to RDL layer 136 of FIG. 1A, is formed. In embodiments, organic dielectrics may be used to create a fanout routing and power signals within the RDL layer 436. In addition, bumps 438, which may be similar to bumps 138 of FIG. 1A, may be physically and electrically coupled with the RDL layer 436. In embodiments, the bumps 438 may include copper, nickel, and/or tin, or may be copper or tin plated bumps or microballs.

FIG. 4F shows a stage in the manufacturing process where dies 410, 412, 414, which may be similar to dies 110, 112, 114 of FIG. 1A, may be coupled with the substrate 402. A hybrid bonding process may be used to physically couple the dies 410, 412, 414 to a surface of the substrate 402 and to electrically couple the dies 410, 412, 414 to the TGV 406.

FIG. 4G shows another stage in the manufacturing process where dies 410, 412, 414 may be physically and electrically coupled with substrate 402. Another RDL 440, which may be similar to RDL 140 of FIG. 1C, may be formed on a surface of the substrate 402 and bumps 442, which may be similar to bumps 142 of FIG. 1C, may be subsequently formed on the RDL 440. Dies 410, 412, 414 may then be physically and electrically coupled with the bumps 442.

FIG. 5 illustrates multiple examples of laser-assisted etching of glass interconnects processes (which may be referred to as "LEGIT" herein), in accordance with embodiments. One use of the LEGIT technique is to provide an alternative substrate core material to the legacy copper clad laminate (CCL) core used in semiconductor packages used to implement products such as servers, graphics, clients, 5G, and the like. By using laser-assisted etching, crack free, high density via drills, hollow shapes may be formed into a glass substrate. In embodiments, different process parameters may be adjusted to achieve drills of various shapes and depths, thus opening the door for innovative devices, architectures, processes, and designs in glass. Embodiments, such as the bridge discussed herein, may also take advantage of these techniques.

Diagram 500 shows a high-level process flow for a through via and blind via (or trench) in a microelectronic package substrate (e.g. glass) using LEGIT to create a through via or a blind via. A resulting volume/shape of glass with laser-induced morphology change that can then be selectively etched to create a trench, a through hole or a void that can be filled with conductive material. A through via 512 is created by laser pulses from two laser sources 502, 504 on opposite sides of a glass wafer 506. As used herein, a through drill and a through via refers to when the drill or the via starts on one side of the glass/substrate and ends on the other side. A blind drill and a blind via refers to when the drill or the via starts on the surface of the substrate and stops half way inside the substrate. In embodiments, the laser pulses from the two laser sources 502, 504 are applied perpendicularly to the glass wafer 506 to induce a morphological change 508, which may also be referred to as a structural change, in the glass that encounters the laser pulses. This morphological change 508 includes changes in the molecular structure of the glass to make it easier to etch out (remove a portion of the glass). In embodiments, a wet etch process may be used.

Diagram 520 shows a high level process flow for a double blind shape. A double blind shape 532, 533 may be created by laser pulses from two laser sources 522, 524, which may be similar to laser sources 502, 504, that are on opposite sides of the glass wafer 526, which may be similar to glass wafer 506. In this example, adjustments may be made in the laser pulse energy and/or the laser pulse exposure time from the two laser sources 522, 524. As a result, morphological changes 528, 529 in the glass 526 may result, with these changes making it easier to etch out portions of the glass. In embodiments, a wet etch process may be used.

Diagram 540 shows a high level process flow for a single-blind shape, which may also be referred to as a trench. In this example, a single laser source 542 delivers a laser pulse to the glass wafer 546 to create a morphological change 548 in the glass 546. As described above, these morphological changes make it easier to etch out a portion of the glass 552. In embodiments, a wet etch process may be used.

Diagram 560 shows a high level process flow for a through via shape. In this example, a single laser source 562 applies a laser pulse to the glass 566 to create a morphological change 568 in the glass 566, with the change making it easier to etch out a portion of the glass 572. As shown here, the laser pulse energy and/or laser pulse exposure time from the laser source 562 has been adjusted to create an etched out portion 572 that extends entirely through the glass 566.

With respect to FIG. 5, although embodiments show laser sources 502, 504, 522, 524, 542, 562 as perpendicular to a surface of the glass 506, 526, 546, 566, in embodiments, the laser sources may be positioned at an angle to the surface of the glass, with pulse energy and/or pulse exposure time variations in order to cause a diagonal via or a trench, or to shape the via, such as 512, 572, for example to make it cylindrical, tapered, or include some other feature. In addition, varying the glass type may also cause different features within a via or a trench as the etching of glass is strongly dependent on the chemical composition of the glass.

In embodiments using the process described with respect to FIG. 5, through hole vias 512, 572 may be created that are less than 10 µm in diameter, and may have an aspect ratio of 40:1 to 50:1. As a result, a far higher density of vias may be placed within the glass and be placed closer to each other at a fine pitch. In embodiments, this pitch may be 50 µm or less. After creating the vias or trenches, a metallization process may be applied in order to create a conductive pathway through the vias or trenches, for example a plated through hole (PTH). Using these techniques, finer pitch vias may result in better signaling, allowing more I/O signals to be routed through the glass wafer and to other coupled components such as a substrate.

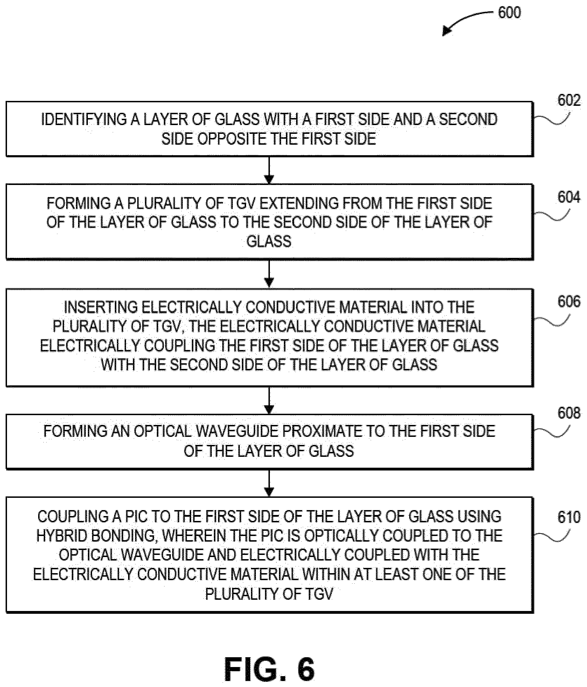

FIG. 6 illustrates an example of a process for coupling an open cavity PIC with a thermal/power die, in accordance with various embodiments. Process 600 may be performed using the techniques, methods, systems, and/or apparatus as described with respect to FIGs. 1-5.

At block 602, the process may include identifying a layer of glass with a first side and a second side opposite the first side.

At block 604, the process may further include forming a plurality of TGV extending from the first side of the layer of glass to the second side of the layer of glass.

At block 606, the process may further include inserting electrically conductive material into the plurality of TGV, the electrically conductive material electrically coupling the first side of the layer of glass with the second side of the layer of glass.

At block 608, the process may further include forming an optical waveguide proximate to the first side of the layer of glass.

At block 610, the process may further include coupling a PIC to the first side of the layer of glass using hybrid bonding, wherein the PIC is optically coupled to the optical waveguide and electrically coupled with the electrically conductive material within at least one of the plurality of TGV.

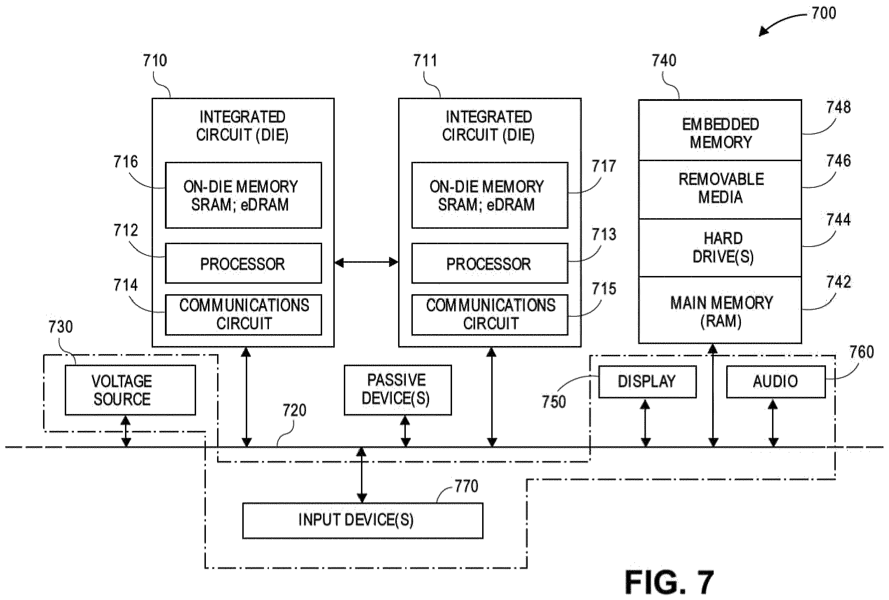

FIG. 7 is a schematic of a computer system 700, in accordance with an embodiment of the present invention. The computer system 700 (also referred to as the electronic system 700) as depicted can embody a double-sided glass substrate with a hybrid bonded PIC, according to any of the several disclosed embodiments and their equivalents as set forth in this disclosure. The computer system 700 may be a mobile device such as a netbook computer. The computer system 700 may be a mobile device such as a wireless smart phone. The computer system 700 may be a desktop computer. The computer system 700 may be a hand-held reader. The computer system 700 may be a server system. The computer system 700 may be a supercomputer or high-performance computing system.

In an embodiment, the electronic system 700 is a computer system that includes a system bus 720 to electrically couple the various components of the electronic system 700. The system bus 720 is a single bus or any combination of busses according to various embodiments. The electronic system 700 includes a voltage source 730 that provides power to the integrated circuit 710. In some embodiments, the voltage source 730 supplies current to the integrated circuit 710 through the system bus 720.

The integrated circuit 710 is electrically coupled to the system bus 720 and includes any circuit, or combination of circuits according to an embodiment. In an embodiment, the integrated circuit 710 includes a processor 712 that can be of any type. As used herein, the processor 712 may mean any type of circuit such as, but not limited to, a microprocessor, a microcontroller, a graphics processor, a digital signal processor, or another processor. In an embodiment, the processor 712 includes, or is coupled with, a double-sided glass substrate with a hybrid bonded PIC, as disclosed herein. In an embodiment, SRAM embodiments are found in memory caches of the processor. Other types of circuits that can be included in the integrated circuit 710 are a custom circuit or an application-specific integrated circuit (ASIC), such as a communications circuit 714 for use in wireless devices such as cellular telephones, smart phones, pagers, portable computers, two-way radios, and similar electronic systems, or a communications circuit for servers. In an embodiment, the integrated circuit 710 includes on-die memory 716 such as static random-access memory (SRAM). In an embodiment, the integrated circuit 710 includes embedded on-die memory 716 such as embedded dynamic random-access memory (eDRAM).

In an embodiment, the integrated circuit 710 is complemented with a subsequent integrated circuit 711. Useful embodiments include a dual processor 713 and a dual communications circuit 715 and dual on-die memory 717 such as SRAM. In an embodiment, the dual integrated circuit 710 includes embedded on-die memory 717 such as eDRAM

In an embodiment, the electronic system 700 also includes an external memory 740 that in turn may include one or more memory elements suitable to the particular application, such as a main memory 742 in the form of RAM, one or more hard drives 744, and/or one or more drives that handle removable media 746, such as diskettes, compact disks (CDs), digital variable disks (DVDs), flash memory drives, and other removable media known in the art. The external memory 740 may also be embedded memory 748 such as the first die in a die stack, according to an embodiment.

In an embodiment, the electronic system 700 also includes a display device 750, an audio output 760. In an embodiment, the electronic system 700 includes an input device such as a controller 770 that may be a keyboard, mouse, trackball, game controller, microphone, voice-recognition device, or any other input device that inputs information into the electronic system 700. In an embodiment, an input device 770 is a camera. In an embodiment, an input device 770 is a digital sound recorder. In an embodiment, an input device 770 is a camera and a digital sound recorder.

As shown herein, the integrated circuit 710 can be implemented in a number of different embodiments, including a package substrate having a double-sided glass substrate with a hybrid bonded PIC, according to any of the several disclosed embodiments and their equivalents, an electronic system, a computer system, one or more methods of fabricating an integrated circuit, and one or more methods of fabricating an electronic assembly that includes a package substrate having a double-sided glass substrate with a hybrid bonded PIC, according to any of the several disclosed embodiments as set forth herein in the various embodiments and their art-recognized equivalents. The elements, materials, geometries, dimensions, and sequence of operations can all be varied to suit particular I/O coupling requirements including array contact count, array contact configuration for a microelectronic die embedded in a processor mounting substrate according to any of the several disclosed package substrates having a double-sided glass substrate with a hybrid bonded PIC embodiments and their equivalents. A foundation substrate may be included, as represented by the dashed line of FIG. 7. Passive devices may also be included, as is also depicted in FIG. 7.

Various embodiments may include any suitable combination of the above-described embodiments including alternative (or) embodiments of embodiments that are described in conjunctive form (and) above (e.g., the "and" may be "and/or"). Furthermore, some embodiments may include one or more articles of manufacture (e.g., non-transitory computer-readable media) having instructions, stored thereon, that when executed result in actions of any of the above-described embodiments. Moreover, some embodiments may include apparatuses or systems having any suitable means for carrying out the various operations of the above-described embodiments.

The above description of illustrated embodiments, including what is described in the Abstract, is not intended to be exhaustive or to limit embodiments to the precise forms disclosed. While specific embodiments are described herein for illustrative purposes, various equivalent modifications are possible within the scope of the embodiments, as those skilled in the relevant art will recognize.

These modifications may be made to the embodiments in light of the above detailed description. The terms used in the following claims should not be construed to limit the embodiments to the specific implementations disclosed in the specification and the claims. Rather, the scope of the invention is to be determined entirely by the following claims, which are to be construed in accordance with established doctrines of claim interpretation.

The following paragraphs describe examples of various embodiments.

### EXAMPLES

Example 1 is a package comprising: a layer of glass having a first side and a second side opposite the first side; one or more through glass vias (TGV) that extend from the first side of the layer of glass to the second side of the layer of glass, wherein the one or more TGV include an electrically conductive material that electrically couples the first side of the layer of glass with the second side of the layer of glass; and a photonic integrated circuit (PIC) physically coupled to the first side of the layer of glass via hybrid bonding, wherein the PIC is electrically coupled with the one or more TGV.

Example 2 may include the package of example 1, further comprising a die physically coupled with the second side of the layer of glass, wherein the die is electrically coupled with the one or more TGV.

Example 3 may include the package of example 2, wherein the die is a selected one of: an XPU die, a high-bandwidth memory die, or an SRAM die.

Example 4 may include the package example 2, further comprising a redistribution layer (RDL) between the die and the second side of the layer of glass, wherein the RDL electrically couples the die with the one or more TGV.

Example 5 may include the package of example 2, wherein the die is a plurality of dies, wherein the one or more TGV is a plurality of sets of one or more TGV.

Example 6 may include the package of example 5, wherein the plurality of dies are directly physically coupled with the first side of the glass layer, and wherein at least one of the plurality of dies is coupled with at least one of the plurality of sets of one or more TGV.

Example 7 may include the package of example 5, wherein at least one of the plurality of dies are physically coupled with a RDL, the RDL placed between the at least one of the plurality of dies and the second side of the layer of glass, wherein the RDL electrically couples the at least one of the plurality of dies, respectively, with at least one of the plurality of sets of one or more TGV.

Example 8 may include the package of example 5, wherein the PIC is a bridge that electrically couples at least one of the plurality of dies with another of the plurality of dies.

Example 9 may include the package of example 1, further comprising a cavity in the first side of the layer of glass extending toward the second side of the layer of glass; and wherein the PIC is placed within the cavity.

Example 10 may include the package of example 1, further comprising an optical waveguide within the layer of glass, the optical waveguide optically coupled with the PIC.

Example 11 may include the package of example 10, wherein the optical waveguide is optically coupled with the PIC with an evanescent coupling.

Example 12 may include the package of any one of examples 1-11, wherein the PIC has a z-height of 50 µm or greater.

Example 13 is a method comprising: identifying a layer of glass with a first side and a second side opposite the first side; forming a plurality of TGV extending from the first side of the layer of glass to the second side of the layer of glass; inserting electrically conductive material into the plurality of TGV, the electrically conductive material electrically coupling the first side of the layer of glass with the second side of the layer of glass; forming an optical waveguide proximate to the first side of the layer of glass; and coupling a PIC to the first side of the layer of glass using hybrid bonding, wherein the PIC is optically coupled to the optical waveguide and electrically coupled with the electrically conductive material within at least one of the plurality of TGV.

Example 14 may include the method of example 13, wherein the PIC is optically coupled to the optical waveguide with an evanescent coupling.

Example 15 may include the method of example 13, wherein coupling one or more dies to the second side of the layer of glass further comprises: forming a redistribution layer (RDL) on the second side of the layer of glass, the RDL electrically coupled with the electrically conductive material within at least one of the plurality of TGV; and coupling one or more dies to the RDL, wherein the one or more dies is electrically coupled with the RDL and electrically coupled with the PIC.

Example 16 may include the method of any one of examples 13-15, further comprising: coupling one or more dies to the second side of the layer of glass using hybrid bonding, wherein the one or more dies is electrically coupled with the electrically conductive material in the at least one of the plurality of formed TGVs.

Example 17 may include the method of example 16, wherein at least two or more of the dies are electrically coupled with the PIC.

Example 18 is a package comprising: a layer of glass having a first side and a second side opposite the first side; a plurality of through glass vias (TGV) that extend from the first side of the layer of glass to the second side of the layer of glass, wherein the plurality of TGV include an electrically conductive material that electrically couples the first side of the layer of glass with the second side of the layer of glass; a plurality of PICs physically coupled to the first side of the layer of glass via hybrid bonding, wherein the plurality of PICs are electrically coupled, respectively, with at least one of the plurality of TGV; a plurality of optical waveguides within the layer of glass, wherein the plurality of optical waveguides are optically coupled, respectively, with the plurality of PICs; and a plurality of dies physically coupled with the second side of the layer of glass, wherein the plurality of dies are electrically coupled, respectively, with at least one of the plurality of TGV.

Example 19 may include the package of example 18, wherein the plurality of dies include a selected one or more of: an XPU die, a high-bandwidth memory die, or an SRAM die.

Example 20 may include the package of example 18, wherein one of the plurality of PIC electrically couples a first of the plurality of dies and a second of the plurality of dies, and wherein another of the plurality of PIC electrically couples a third of the plurality of dies and a fourth of the plurality of dies.

Example 21 may include the package of example 18, wherein the plurality of PIC are within a layer of molding, wherein the layer of molding is coupled with the first side of the glass layer.

Example 22 may include the package of example 21, further comprising one or more conductive pillars extending from a first side of the layer of molding to the second side of the layer of molding opposite the first side, and wherein the one or more conductive pillars are electrically coupled with one or more of the plurality of TGV.

Example 23 may include the package of example 22, wherein the first side of the layer of molding is coupled with the first side of the layer of glass; and further comprising a RDL coupled with the second side of the layer of molding, the RDL electrically coupled with the one or more conductive pillars.

Example 24 may include the package of example 23, wherein the RDL is coupled with a plurality of electrically conductive bumps.

Example 25 may include the package of any one of examples 18-24, wherein the plurality of waveguides are optically coupled, respectively, to a plurality of optical connectors physically coupled with the layer of glass.

## Claims

1. A package comprising:
a layer of glass having a first side and a second side opposite the first side;
one or more through glass vias (TGV) that extend from the first side of the layer of glass to the second side of the layer of glass, wherein the one or more TGV include an electrically conductive material that electrically couples the first side of the layer of glass with the second side of the layer of glass; and
a photonic integrated circuit (PIC) physically coupled to the first side of the layer of glass via hybrid bonding, wherein the PIC is electrically coupled with the one or more TGV.

2. The package of claim 1, further comprising a die physically coupled with the second side of the layer of glass, wherein the die is electrically coupled with the one or more TGV.

3. The package of claim 2, wherein the die is a selected one of: an XPU die, a high-bandwidth memory die, or an SRAM die.

4. The package claim 2, further comprising a redistribution layer (RDL) between the die and the second side of the layer of glass, wherein the RDL electrically couples the die with the one or more TGV.

5. The package of claim 2, wherein the die is a plurality of dies, wherein the one or more TGV is a plurality of sets of one or more TGV.

6. The package of claim 5, wherein the plurality of dies are directly physically coupled with the first side of the glass layer, and wherein at least one of the plurality of dies is coupled with at least one of the plurality of sets of one or more TGV.

7. The package of claim 5, wherein at least one of the plurality of dies are physically coupled with a RDL, the RDL placed between the at least one of the plurality of dies and the second side of the layer of glass, wherein the RDL electrically couples the at least one of the plurality of dies, respectively, with at least one of the plurality of sets of one or more TGV.

8. The package of claim 5, wherein the PIC is a bridge that electrically couples at least one of the plurality of dies with another of the plurality of dies.

9. The package of claim 1, further comprising a cavity in the first side of the layer of glass extending toward the second side of the layer of glass; and wherein the PIC is placed within the cavity.

10. The package of claim 1, further comprising an optical waveguide within the layer of glass, the optical waveguide optically coupled with the PIC.

11. The package of claim 10, wherein the optical waveguide is optically coupled with the PIC with an evanescent coupling.

12. The package of claim 1, 2, 3, 4, 5, 6, 7, 8, 9, 10 or 11, wherein the PIC has a z-height of 50 µm or greater.

13. A method comprising:
identifying a layer of glass with a first side and a second side opposite the first side;
forming a plurality of TGV extending from the first side of the layer of glass to the second side of the layer of glass;
inserting electrically conductive material into the plurality of TGV, the electrically conductive material electrically coupling the first side of the layer of glass with the second side of the layer of glass;
forming an optical waveguide proximate to the first side of the layer of glass; and
coupling a PIC to the first side of the layer of glass using hybrid bonding, wherein the PIC is optically coupled to the optical waveguide and electrically coupled with the electrically conductive material within at least one of the plurality of TGV.

14. The method of claim 13, wherein the PIC is optically coupled to the optical waveguide with an evanescent coupling.

15. The method of claim 13, wherein coupling one or more dies to the second side of the layer of glass further comprises:
forming a redistribution layer (RDL) on the second side of the layer of glass, the RDL electrically coupled with the electrically conductive material within at least one of the plurality of TGV; and
coupling one or more dies to the RDL, wherein the one or more dies is electrically coupled with the RDL and electrically coupled with the PIC.
